# FASCICULE DE BREVET EUROPEEN

(11) **EP 3 738 831 B1**
(45) Date de publication et mention de la délivrance du brevet: **24.11.2021**
(21) Numéro de dépôt: 20174641.9
(22) Date de dépôt: 14.05.2020
(51) Int. Cl.: B60R 5/04

(54) **SYSTÈME DE RECOUVREMENT D'UN COMPARTIMENT À BAGAGES DE VÉHICULE AUTOMOBILE**
ABDECKSYSTEM EINES KOFFERRAUMFACHS EINES KRAFTFAHRZEUGS
SYSTEM FOR COVERING A LUGGAGE COMPARTMENT OF A MOTOR VEHICLE

(30) Priorité: 14.05.2019 FR 1905021
(43) Date de publication de la demande: 18.11.2020
(73) Titulaire: TREVES Products, Services & Innovation, 75008 Paris (FR)
(72) Inventeur: ELLIS, Anthony, 75008 PARIS (FR); AIRAULT, Jean-Yves, 75008 PARIS (FR)
(74) Mandataire: Sayettat, Julien Christian

(56) Documents cités:
- FR-A1- 2 986 199
- US-A1- 2017 210 212

## Description

L'invention concerne un système de recouvrement d'un compartiment à bagages de véhicule automobile et un dispositif de recouvrement pour un tel système.

Il est connu de réaliser un système de recouvrement d'un compartiment à bagages de véhicule automobile, ledit système comprenant :
- un rideau de recouvrement dudit compartiment,
- des moyens d'accrochage disposés sur les bords latéraux dudit rideau,
- des moyens d'accrochage réciproques prévus en parties latérales dudit compartiment, afin de permettre un montage en tension transversale dudit rideau pour le mettre en configuration de recouvrement.

Un tel dispositif présente l'avantage de pouvoir être rangé très aisément, notamment par pliage du rideau, lorsqu'il n'est pas utilisé.

Cependant, on observe usuellement que le rideau en configuration de recouvrement ne présente pas une tension satisfaisante, ce qui occasionne l'apparition d'un pochage inesthétique.

Il a été proposé divers agencements pour pallier cet inconvénient, mais ils donnent des résultats insatisfaisants et/ou ils sont de réalisation complexe et/ou leur ergonomie est insatisfaisante et/ou ils sont peu esthétiques.

L'invention a pour but de pallier ces inconvénients.

A cet effet, et selon un premier aspect, l'invention propose un système de recouvrement d'un compartiment à bagages de véhicule automobile, ledit système comprenant :
- un rideau de recouvrement dudit compartiment présentant une première et une deuxième face,
- des moyens d'accrochage disposés sur les bords latéraux dudit rideau,
- des moyens d'accrochage réciproques prévus en parties latérales dudit compartiment, afin de permettre un montage en tension transversale dudit rideau pour le mettre en configuration de recouvrement,
lesdits moyens comprenant :
- un lien élastique dont une première extrémité est pourvue d'un premier embout et dont une deuxième extrémité est pourvue d'un deuxième embout, ledit deuxième embout étant sous forme de profilé pourvu en son extrémité libre d'une collerette,
- une première coque plaquée en bordure dudit rideau sur ladite première face, l'intérieur de ladite coque étant pourvu d'un moyen d'ancrage dudit premier embout, ladite coque étant en outre pourvue d'une première saillie transversale en forme de gouttière épousant la forme dudit deuxième embout, ledit embout étant monté en coulissement dans ladite saillie, ladite collerette venant en butée contre l'extrémité libre de ladite saillie quand ledit lien n'est pas sollicité en traction,
- une deuxième coque plaquée en bordure dudit rideau sur ladite deuxième face de manière à venir refermer ladite première coque avec interposition dudit rideau entre les deux, ladite deuxième coque étant en outre pourvue d'une deuxième saillie transversale refermant ladite première saillie de manière à former avec elle un manchon de réception en coulissement dudit deuxième embout,
- des moyens de fixation desdites coques sur ledit rideau,
et lesdits moyens réciproques présentant une encoche de réception dudit manchon, ladite encoche présentant une épaisseur transversale analogue à la longueur dudit manchon, ledit manchon étant maintenu dans ladite encoche par ladite collerette prenant appui en bordure extérieure de ladite encoche et étant rappelée vers l'intérieur par ledit lien.

Dans cette description, les termes de positionnement dans l'espace (haut, longitudinal, transversal, latéral, vertical,...) sont pris en référence au système monté dans le véhicule.

Avec l'agencement proposé, on obtient une très bonne mise en tension du rideau malgré les dispersions dimensionnelles qui peuvent se présenter d'un véhicule à l'autre.

En outre, l'agencement proposé est d'une grande simplicité et d'une ergonomie très satisfaisante, ajouté au fait que l'esthétique peut être aisément optimisée.

Selon un deuxième aspect, l'invention propose un dispositif de recouvrement pour un tel système.

D'autres particularités et avantages de l'invention apparaîtront dans la description qui suit, faite en référence aux figures jointes, dans lesquelles :

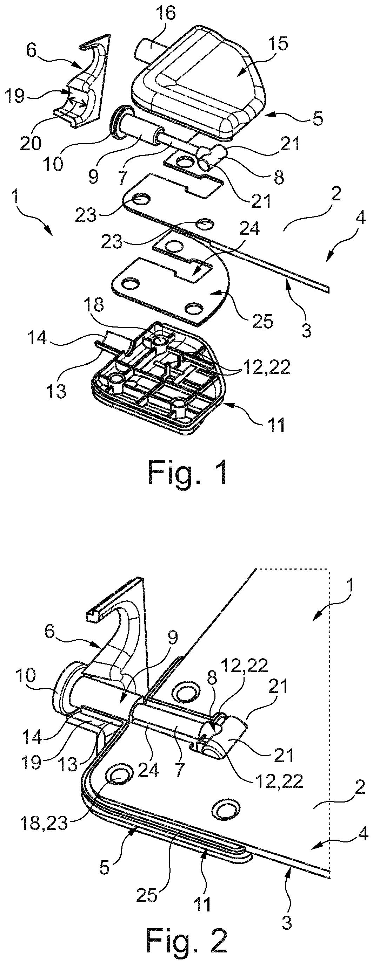

[Fig.1] est une vue schématique en perspective partielle éclatée d'un système selon une réalisation,
[Fig.2] est une vue écorchée en perspective non éclatée du système de la figure 1,

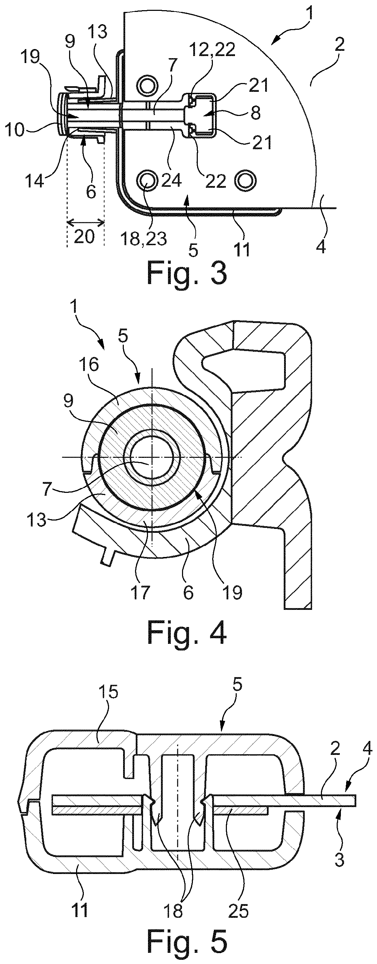

[Fig.3] est une vue de haut analogue à la figure 2,
[Fig.4] est une vue en coupe longitudinale verticale du système des figures précédentes,
[Fig.5] est une vue en coupe verticale d'un moyen d'accrochage du système des figures précédentes.

En référence aux figures, on décrit un système 1 de recouvrement d'un compartiment à bagages de véhicule automobile, ledit système comprenant :
- un rideau 2 de recouvrement dudit compartiment présentant une première 3 et une deuxième 4 face,
- des moyens d'accrochage 5 disposés sur les bords latéraux dudit rideau,
- des moyens d'accrochage réciproques 6 prévus en parties latérales dudit compartiment, afin de permettre un montage en tension transversale dudit rideau pour le mettre en configuration de recouvrement,
lesdits moyens comprenant :
- un lien élastique 7 dont une première extrémité est pourvue d'un premier embout 8 et dont une deuxième extrémité est pourvue d'un deuxième embout 9, ledit deuxième embout étant sous forme de profilé pourvu en son extrémité libre d'une collerette 10,
- une première coque 11 plaquée en bordure dudit rideau sur ladite première face, l'intérieur de ladite coque étant pourvu d'un moyen d'ancrage 12 dudit premier embout, ladite coque étant en outre pourvue d'une première saillie 13 transversale en forme de gouttière épousant la forme dudit deuxième embout, ledit embout étant monté en coulissement dans ladite saillie, ladite collerette venant en butée contre l'extrémité libre 14 de ladite saillie quand ledit lien n'est pas sollicité en traction,
- une deuxième coque 15 plaquée en bordure dudit rideau sur ladite deuxième face de manière à venir refermer ladite première coque avec interposition dudit rideau entre les deux, ladite deuxième coque étant en outre pourvue d'une deuxième saillie 16 transversale refermant ladite première saillie de manière à former avec elle un manchon 17 de réception en coulissement dudit deuxième embout,
- des moyens de fixation 18 desdites coques sur ledit rideau,
et lesdits moyens réciproques présentant une encoche 19 de réception dudit manchon, ladite encoche présentant une épaisseur transversale 20 analogue à la longueur dudit manchon, ledit manchon étant maintenu dans ladite encoche par ladite collerette prenant appui en bordure extérieure de ladite encoche et étant rappelée vers l'intérieur par ledit lien.

Les coques 11,15 sont notamment en matériau plastique moulé.

Selon la réalisation représentée, le deuxième embout 9 est en forme générale de cylindre.

Selon la réalisation représentée, le manchon 17 s'inscrit dans un cylindre.

Selon la réalisation représentée, le premier embout 8 est pourvu de deux saillies radiales 21 diamétralement opposées, le moyen d'ancrage 12 dudit embout comprenant deux butées 22 d'ancrage desdites saillies.

Selon la réalisation représentée, les moyens de fixation 18 s'étendent au travers d'orifices 23 ménagés à travers le rideau 2.

Les moyens de fixation 18 sont des moyens d'emboitement dans la réalisation représentée.

En variante, on pourrait prévoir des moyens de fixation 18 tels que des vis, rivets, bouterolles, etc.

Selon la réalisation représentée, le rideau 2 est pourvu d'une découpe 24 de logement du lien élastique 7.

Selon la réalisation représentée, les encoches 19 sont inclinées par rapport à la verticale, de sorte que le retrait des manchons 17 desdites encoches requière, en sus d'un effort vertical, l'application d'un effort longitudinal à l'encontre d'une force de rappel exercée par une élasticité résiduelle du rideau 2, de manière à permettre un accrochage renforcé dudit rideau sur les parties latérales du compartiment.

Selon une réalisation, le lien élastique 7 est à base de caoutchouc.

Selon la réalisation représentée le système 1 comprend en outre une plaque de raidissement 25, par exemple en matériau plastique, du rideau 2 s'interposant entre l'une des coques 11 et ledit rideau, ladite plaque étant fixée sur ledit rideau par des moyens de fixation additionnels non représentés, par exemple par couture, un tel agencement permettant d'apporter une très grande robustesse à la tenue des moyens d'accrochage 5.

Selon une réalisation, au moins un embout 8,9 est à base de matériau plastique moulé surmoulant l'extrémité de lien 7 concernée.

On décrit enfin un dispositif de recouvrement pour un tel système, ledit dispositif comprenant :
- un rideau 2 de recouvrement dudit compartiment présentant une première 3 et une deuxième 4 face,
- des moyens d'accrochage 5 disposés sur les bords latéraux dudit rideau,
lesdits moyens comprenant :
- un lien élastique 7 dont une première extrémité est pourvue d'un premier embout 8 et dont une deuxième extrémité est pourvue d'un deuxième embout 9, ledit deuxième embout étant sous forme de profilé pourvu en son extrémité libre d'une collerette 10,
- une première coque 11 plaquée en bordure dudit rideau sur ladite première face, l'intérieur de ladite coque étant pourvu d'un moyen d'ancrage 12 dudit premier embout, ladite coque étant en outre pourvue d'une première saillie 13 transversale en forme de gouttière épousant la forme dudit deuxième embout, ledit embout étant monté en coulissement dans ladite saillie, ladite collerette venant en butée contre l'extrémité libre 14 de ladite saillie quand ledit lien n'est pas sollicité en traction,
- une deuxième coque 15 plaquée en bordure dudit rideau sur ladite deuxième face de manière à venir refermer ladite première coque avec interposition dudit rideau entre les deux, ladite deuxième coque étant en outre pourvue d'une deuxième saillie 16 transversale refermant ladite première saillie de manière à former avec elle un manchon 17 de réception en coulissement dudit deuxième embout,
- des moyens de fixation 18 desdites coques sur ledit rideau.

## Revendications

1. Système (1) de recouvrement d'un compartiment à bagages de véhicule automobile, ledit système comprenant :
• un rideau (2) de recouvrement dudit compartiment présentant une première (3) et une deuxième (4) face,
• des moyens d'accrochage (5) disposés sur les bords latéraux dudit rideau,
• des moyens d'accrochage réciproques (6) prévus en parties latérales dudit compartiment, afin de permettre un montage en tension transversale dudit rideau pour le mettre en configuration de recouvrement,
ledit système étant **caractérisé en ce que** lesdits moyens comprennent :
• un lien élastique (7) dont une première extrémité est pourvue d'un premier embout (8) et dont une deuxième extrémité est pourvue d'un deuxième embout (9), ledit deuxième embout étant sous forme de profilé pourvu en son extrémité libre d'une collerette (10),
• une première coque (11) plaquée en bordure dudit rideau sur ladite première face, l'intérieur de ladite coque étant pourvu d'un moyen d'ancrage (12) dudit premier embout, ladite coque étant en outre pourvue d'une première saillie (13) transversale en forme de gouttière épousant la forme dudit deuxième embout, ledit embout étant monté en coulissement dans ladite saillie, ladite collerette venant en butée contre l'extrémité libre (14) de ladite saillie quand ledit lien n'est pas sollicité en traction,
• une deuxième coque (15) plaquée en bordure dudit rideau sur ladite deuxième face de manière à venir refermer ladite première coque avec interposition dudit rideau entre les deux, ladite deuxième coque étant en outre pourvue d'une deuxième saillie (16) transversale refermant ladite première saillie de manière à former avec elle un manchon (17) de réception en coulissement dudit deuxième embout,
• des moyens de fixation (18) desdites coques sur ledit rideau, et **en ce que** lesdits moyens réciproques présentent une encoche (19) de réception dudit manchon, ladite encoche présentant une épaisseur transversale (20) analogue à la longueur dudit manchon, ledit manchon étant maintenu dans ladite encoche par ladite collerette prenant appui en bordure extérieure de ladite encoche et étant rappelée vers l'intérieur par ledit lien.

2. Système selon la revendication 1, **caractérisé en ce que** le deuxième embout (9) est en forme générale de cylindre.

3. Système selon l'une des revendications 1 ou 2, **caractérisé en ce que** le manchon (17) s'inscrit dans un cylindre.

4. Système selon l'une quelconque des revendications 1 à 3, **caractérisé en ce que** le premier embout (8) est pourvu de deux saillies radiales (21) diamétralement opposées, le moyen d'ancrage (12) dudit embout comprenant deux butées (22) d'ancrage desdites saillies.

5. Système selon l'une quelconque des revendications 1 à 4, **caractérisé en ce que** les moyens de fixation (18) s'étendent au travers d'orifices (23) ménagés à travers le rideau (2).

6. Système selon l'une quelconque des revendications 1 à 5, **caractérisé en ce que** le rideau (2) est pourvu d'une découpe (24) de logement du lien élastique (7).

7. Système selon l'une des revendications 1 à 6, **caractérisé en ce que** les encoches (19) sont inclinées par rapport à la verticale, de sorte que le retrait des manchons (17) desdites encoches requière, en sus d'un effort vertical, l'application d'un effort longitudinal à l'encontre d'une force de rappel exercée par une élasticité résiduelle du rideau (2), de manière à permettre un accrochage renforcé dudit rideau sur les parties latérales du compartiment.

8. Système selon l'une quelconque des revendications 1 à 7, **caractérisé en ce qu'**il comprend en outre une plaque de raidissement (25) du rideau (2) s'interposant entre l'une des coques (11) et ledit rideau, ladite plaque étant fixée sur ledit rideau par des moyens de fixation additionnels.

9. Système selon l'une quelconque des revendications 1 à 8, **caractérisé en ce qu'**au moins un embout (8,9) est à base de matériau plastique moulé surmoulant l'extrémité de lien (7) concernée.

10. Dispositif de recouvrement pour un système selon l'une quelconque des revendications précédentes, ledit dispositif comprenant :
• un rideau (2) de recouvrement dudit compartiment présentant une première (3) et une deuxième (4) face,
• des moyens d'accrochage (5) disposés sur les bords latéraux dudit rideau,
ledit dispositif étant **caractérisé en ce que** lesdits moyens comprennent :
• un lien élastique (7) dont une première extrémité est pourvue d'un premier embout (8) et dont une deuxième extrémité est pourvue d'un deuxième embout (9), ledit deuxième embout étant sous forme de profilé pourvu en son extrémité libre d'une collerette (10),
• une première coque (11) plaquée en bordure dudit rideau sur ladite première face, l'intérieur de ladite coque étant pourvu d'un moyen d'ancrage (12) dudit premier embout, ladite coque étant en outre pourvue d'une première saillie (13) transversale en forme de gouttière épousant la forme dudit deuxième embout, ledit embout étant monté en coulissement dans ladite saillie, ladite collerette venant en butée contre l'extrémité libre (14) de ladite saillie quand ledit lien n'est pas sollicité en traction,
• une deuxième coque (15) plaquée en bordure dudit rideau sur ladite deuxième face de manière à venir refermer ladite première coque avec interposition dudit rideau entre les deux, ladite deuxième coque étant en outre pourvue d'une deuxième saillie (16) transversale refermant ladite première saillie de manière à former avec elle un manchon (17) de réception en coulissement dudit deuxième embout,
• des moyens de fixation (18) desdites coques sur ledit rideau.

## Patentansprüche

1. System (1) zum Abdecken eines Kofferraums eines Kraftfahrzeugs, wobei das System Folgendes umfasst:
• einen Vorhang (2) zum Abdecken des Raumes, der eine erste (3) und eine zweite (4) Seite aufweist,
• Einhängemittel (5), die an den Seitenrändern des Vorhangs angeordnet sind,
• gegenseitige Einhängemittel (6), die an Seitenteilen des Raumes vorgesehen sind, um eine Montage in Querspannung des Vorhangs zu ermöglichen, um ihn in Abdeckungskonfiguration zu versetzen,
wobei das System **dadurch gekennzeichnet ist, dass** die Mittel Folgendes umfassen:
• eine elastische Verbindung (7) von der ein erstes Ende mit einem ersten Endstück (8) versehen ist und von dem ein zweites Ende mit einem zweiten Endstück (9) versehen ist, wobei das zweite Endstücke in Form eines Profils ist, das an seinem freien Ende mit einem Kragen (10) versehen ist,
• eine erste Schale (11), die an der Umrandung des Vorhangs auf der ersten Seite anliegend ist, wobei das Innere der Schale mit einem Verankerungsmittel (12) des ersten Endstücks versehen ist, wobei die Schale weiter mit einem ersten querlaufenden Vorsprung (13) in Form einer Rinne versehen ist, welcher die Form des zweiten Endstücks annimmt, wobei das Endstück gleitend in dem Vorsprung montiert ist, wobei sich der Kragen auf Anschlag an das freie Ende (14) des Vorsprungs anlegt, wenn die Verbindung nicht auf Zug beansprucht wird,
• eine zweite Schale (15), die an der Umrandung des Vorhangs auf der zweiten Seite anliegend ist, um die erste Schale samt Einlegen des Vorhangs zwischen den beiden zu verschließen, wobei die zweite Schale weiter mit einem zweiten querlaufenden Vorsprung (16) versehen ist, der den ersten Vorsprung derart verschließt, um damit eine Muffe (17) zur gleitenden Aufnahme des zweiten Endstücks zu bilden,
• Befestigungsmittel (18) der Schalen an dem Vorhang, und dadurch, dass die gegenseitigen Mittel eine Kerbe (19) zur Aufnahme der Muffe aufweisen, wobei die Kerbe eine querlaufende Dicke (20) analog zur Länge der Muffe aufweist, wobei die Muffe in der Kerbe durch den Kragen gehalten wird, der sich an die äußere Umrandung der Kerbe anlegt, und durch die Verbindung ins Innere rückgestellt wird.

2. System nach Anspruch 1, **dadurch gekennzeichnet, dass** das zweite Endstück (9) in einer allgemeinen Zylinderform ist.

3. System nach einem der Ansprüche 1 oder 2, **dadurch gekennzeichnet, dass** sich die Muffe (17) in einen Zylinder einfügt.

4. System nach einem der Ansprüche 1 bis 3, **dadurch gekennzeichnet, dass** das erste Endstück (8) mit zwei diametral gegenüberliegenden radialen Vorsprüngen (21) versehen ist, wobei das Verankerungsmittel (12) des Endstücks zwei Anschläge (22) zum Verankern der Vorsprünge umfasst.

5. System nach einem der Ansprüche 1 bis 4, **dadurch gekennzeichnet, dass** sich die Befestigungsmittel (18) durch Öffnungen (23) hindurch erstrecken, die durch den Vorhang (2) hindurch angebracht sind.

6. System nach einem der Ansprüche 1 bis 5, **dadurch gekennzeichnet, dass** der Vorhang (2) mit einem Ausschnitt (24) zur Aufnahme der elastischen Verbindung (7) versehen ist.

7. System nach einem der Ansprüche 1 bis 6, **dadurch gekennzeichnet, dass** die Kerben (19) in Bezug auf die Vertikale derart geneigt sind, dass die Entnahme der Muffen (17) aus den Kerben zusätzlich zu einer vertikalen Kraft, das Anlegen einer Längskraft gegen eine Rückstellkraft, die durch eine Restelastizität des Vorhangs (2) ausgeübt wird, erfordert, um ein verstärktes Einhängen des Vorhangs in die Seitenteile des Raumes zu ermöglichen.

8. System nach einem der Ansprüche 1 bis 7, **dadurch gekennzeichnet, dass** es weiter eine Versteifungsplatte (25) des Vorhangs (2) umfasst, die zwischen eine der Schalen (11) und den Vorhang eingesetzt ist, wobei die Platte durch zusätzliche Befestigungsmittel an dem Vorhang befestigt ist.

9. System nach einem der Ansprüche 1 bis 8, **dadurch gekennzeichnet, dass** mindestens ein Endstück (8, 9) auf Grundlage eines gegossenen Kunststoffmaterials ist, welches das betreffende Ende der Verbindung (7) überzieht.

10. Abdeckungsvorrichtung für ein System nach einem der vorstehenden Ansprüche, wobei die Vorrichtung umfasst:
• einen Vorhang (2) zum Abdecken des Raumes, der eine erste (3) und eine zweite (4) Seite aufweist,
• Einhängemittel (5), die an den Seitenrändern des Vorhangs angeordnet sind,
wobei die Vorrichtung **dadurch gekennzeichnet ist, dass** die Mittel Folgendes umfassen:
• eine elastische Verbindung (7) von der ein erstes Ende mit einem ersten Endstück (8) versehen ist, und von dem ein zweites Ende mit einem zweiten Endstück (9) versehen ist, wobei das zweite Endstücke in Form eines Profils ist, das an seinem freien Ende mit einem Kragen (10) versehen ist,
• eine erste Schale (11), die an der Umrandung des Vorhangs auf der ersten Seite anliegend ist, wobei das Innere der Schale mit einem Verankerungsmittel (12) des ersten Endstücks versehen ist, wobei die Schale weiter mit einem ersten querlaufenden Vorsprung (13) in Form einer Rinne versehen ist, welcher die Form des zweiten Endstücks annimmt, wobei das Endstück gleitend in dem Vorsprung montiert ist, wobei sich der Kragen auf Anschlag an das freie Ende (14) des Vorsprungs anlegt, wenn die Verbindung nicht auf Zug beansprucht wird,
• eine zweite Schale (15), die an der Umrandung des Vorhangs auf der zweiten Seite derart anliegend ist, um die erste Schale samt Einlegen des Vorhangs zwischen den beiden zu verschließen, wobei die zweite Schale weiter mit einem zweiten querlaufenden Vorsprung (16) versehen ist, der den ersten Vorsprung derart verschließt, um damit eine Muffe (17) zur gleitenden Aufnahme des zweiten Endstücks zu bilden,
• Befestigungsmittel (18) der Schalen an dem Vorhang.

## Claims

1. System (1) for covering a luggage compartment of a motor vehicle, said system comprising:
• a screen (2) for covering said compartment having a first (3) and a second (4) face,
• attachment means (5) disposed on the lateral edges of said screen,
• reciprocal attachment means (6) provided in the lateral portions of said compartment, so as to allow for an assembly in transversal tension of said screen to place it in covering configuration,
said system being **characterised in that** said means comprise:
• an elastic link (7) a first end of which is provided with a first endpiece (8) and a second end of which is provided with a second endpiece (9), said second endpiece being in the form of a profile provided at its free end with a collar (10),
• a first shell (11) thrust at the edge of said screen on said first face, the interior of said shell being provided with a means (12) for anchoring said first endpiece, said shell being furthermore provided with a first transversal protrusion (13) in the form of a gutter matching the shape of said second endpiece, said endpiece being slidably mounted in said protrusion, said collar abutting against the free end (14) of said protrusion when said link is not solicited in traction,
• a second shell (15) thrust at the edge of said screen on said second face in such a way as to close said first shell with interposition of said screen between the two, said second shell being furthermore provided with a second transversal protrusion (16) closing said first protrusion in such a way as to form with it a sleeve (17) for slidably receiving said second endpiece,
• means (18) for fastening said shells on said screen, and **in that** said reciprocal means have a notch (19) for receiving said sleeve, said notch having a transversal thickness (20) similar to the length of said sleeve, said sleeve being maintained in said notch by said collar bearing against the external edge of said notch and being recalled towards the inside by said link.

2. System according to claim 1, **characterised in that** the second endpiece (9) has a general cylinder shape.

3. System according to one of claims 1 or 2, **characterised in that** the sleeve (17) is inscribed in a cylinder.

4. System according to any of claims 1 to 3, **characterised in that** the first endpiece (8) is provided with two diametrically opposite radial protrusions (21), the means (12) for anchoring said endpiece comprising two abutments (22) for anchoring said protrusions.

5. System according to any of claims 1 to 4, **characterised in that** the means (18) for fastening extend through orifices (23) arranged through the screen (2).

6. System according to any of claims 1 to 5, **characterised in that** the screen (2) is provided with a housing cut-out (24) of the elastic link (7).

7. System according to one of claims 1 to 6, **characterised in that** the notches (19) are inclined with respect to the vertical, in such a way that the withdrawal of the sleeves (17) from said notches requires, in addition to a vertical force, the application of longitudinal force against a return force exerted by a residual elasticity of the screen (2), in such a way as to allow for a reinforced attaching of said screen on the lateral portions of the compartment.

8. System according to any of claims 1 to 7, **characterised in that** it further comprises a stiffening plate (25) of the screen (2) being interposed between one of the shells (11) and said screen, said plate being fastened on said screen by additional means for fastening.

9. System according to any of claims 1 to 8, **characterised in that** at least one endpiece (8, 9) has a base of moulded plastic material overmoulding the end of the link (7) concerned.

10. Covering device for a system according to any preceding claim, said device comprising:
• a screen (2) for covering said compartment having a first (3) and a second (4) face,
• attachment means (5) disposed on the lateral edges of said screen,
said device being **characterised in that** said means comprise:
• an elastic link (7) a first end of which is provided with a first endpiece (8) and a second end of which is provided with a second endpiece (9), said second endpiece being in the form of a profile provided at its free end with a collar (10),
• a first shell (11) thrust at the edge of said screen on said first face, the inside of said shell being provided with a means (12) for anchoring said first endpiece, said shell being furthermore provided with a first transversal protrusion (13) in the form of a gutter matching the shape of said second endpiece, said endpiece being slidably mounted in said protrusion, said collar abutting against the free end (14) of said protrusion when said link is not solicited in traction,
• a second shell (15) thrust at the edge of said screen on said second face in such a way as to close said first shell with interposition of said screen between the two, said second shell being furthermore provided with a second transversal protrusion (16) closing said first protrusion in such a way as to form with it a sleeve (17) for slidably receiving said second endpiece,
• means (18) for fastening said shells on said screen.
